# EUROPÄISCHE PATENTSCHRIFT

(11) **EP 1 050 419 B1**
(45) Veröffentlichungstag und Bekanntmachung des Hinweises auf die Patenterteilung: **02.07.2003**
(21) Anmeldenummer: 00109294.9
(22) Anmeldetag: 29.04.2000
(51) Int. Cl.: B60C 25/132

(54) **Adaptereinrichtung für eine Reifen-Montagemaschine**
Adapter device for a tyre-mounting apparatus
Dispositif d'adaptation pour une machine pour le montage de pneumatiques

(30) Priorität: 05.05.1999 DE 19920608
(43) Veröffentlichungstag der Anmeldung: 08.11.2000
(73) Patentinhaber: Continental Aktiengesellschaft, 30165 Hannover (DE)
(72) Erfinder: Dieckmann, Andreas, 30163 Hannover (DE); Schürmann, Oliver, Dr., 30855 Langenhagen (DE)

(56) Entgegenhaltungen:
- EP-A- 0 482 701
- FR-A- 2 699 121

## Beschreibung

Die Erfindung betrifft eine Adaptereinrichtung für eine Reifen-Montagemaschine zur Montage und Demontage von Reifen auf Felgen mit innerhalb des Reifens angeordneten ringförmigen oder ringsegmentförmigen Zusatzelementen, insbesondere mit Umhüllungen oder Verstärkungen versehenen Schaumstoffringen, wobei die Reifen-Montagemaschine eine Aufnahme für die Felge und ein an einem Rahmen (Galgen) angeordnetes und der Felge zustellbares Montagewerkzeug mit einem löffelartigen Fortsatz zum Überheben eines Reifenwulstes einer Reifenseite über das Felgenhorn und eine im ereich des Felgenhorns ablaufende Abstützrolle zur Lagepositionierung des Werkzeuges, sowie ggf. eine zustellbare Druckrolle zum nachlaufenden Drücken der Reifenseitenwand und des Reifenwulstes in das Felgentiefbett aufweist.

Hiebei ist üblichrweise entweder die Aufnahme drehbar angeordnet oder aber das Montagewerkzeug so ausgebildet, daß der Umfang der Felge bzw. des Felgenhornes vom Montagewerkzeug umfahren werden kann.

Eine solche Reifen-Montagemaschine wird zum Aufziehen von Reifen auf Felgen benutzt bzw. zum Abziehen von Reifen und ist häufig als Halbautomat aufgebaut, bei dem die Beschickung mit Reifen und Felgen und die Steuerung und Schaltung der einzelnen Funktionen manuell erfolgt. Der Bedienungsmann legt hierzu eine Felge auf die z.B. drehbare und mit einer Spannvorrichtung versehene Aufnahme der Reifen-Montagemaschine und positioniert danach den Reifen über der Felge und den Eingriff des Montagewerkzeuges.

Das Montagewerkzeug ist mit einem löffelartigen Fortsatz zum Überheben eines ersten Reifenwulstes über das Felgenhom und mit einer nachlaufenden zustellbaren Druckrolle versehen, wodurch der erste Reifenwulst ohne Beschädigungen in das Tiefbett der Felge gedrückt werden kann. Zusätzlich besitzt das Montagewerkzeug eine im Bereich des Felgenhorns ablaufende Abstützrolle zur Lagepositionierung des Werkzeuges. Nachdem der erste Reifenwulst lose im Tiefbett liegt, wird er zur gegenüberliegenden Felgenseite geschoben und der zweite Reifenwulst mit dem Montagewerkzeug auf gleiche Art und Weise über das Felgenhorn gehoben und zur Anlage auf die benachbarte Felgenschulter gebracht. Die vollständige Positionierung des Reifens und der Sitz beider Reifenwülste auf den Felgenschultern ergibt sich dann nach dem vollständigen Befüllen und nach dem Aufbau des Innendruckes.

Ebenfalls üblich sind Vollautomaten, bei denen beide Reifenwülste gleichzeitig oder nacheinander über ein Felgenhorn gehoben werden und bei denen die Beschickung mit Reifen und / oder Felge und die Steuerung automatisch erfolgen.

Werden - z.B. mit einem o.g. Halbautomaten - jedoch innerhalb des Reifens und auf der Felge im Felgentiefbett angeordnete ringförmige oder ringsegmentförmige Zusatzelemente aufgebracht, etwa als Schallabsorber dienende Schaumstoffringe, die gegenenfalls auch mit Umhüllungen oder auch vorspringenden Verstärkungen versehen sein können, so gestaltet sich die Montage eines Reifens auf einer Felge dadurch schwierig, daß ein solches ringförmiges Zusatzelement, welches z.B. vor der Reifenmontage auf die Felge aufgezogen wird, bereits wesentliche Teile des Tiefbettes ausfüllt, in das der Reifenwulst zur Montage des Reifens eintreten muß.

Kann auch der erste Reifenwulst noch problemlos über das obere Felgenhorn gehoben werden, so ist jedoch bei Zusatzelementen größeren Durchmessers das Hinüberschieben des Reifenwulstes auf die gegenüberliegende Felgenseite schwierig, da in aller Regel der Außendurchmesser des Zusatzelementes größer ist als der Innendurchmesser des Reifens am Reifenwulst. Ein solches Überschieben erfolgte bisher in recht kraftaufwendiger Handarbeit mit Hilfe von manuell angesetzten Hebeln unter partieller Kompression des Zusatzelementes. Bei einer solchen Verfahrensweise kann das Zusatzelement relativ leicht verschoben oder auch beschädigt werden, und ist zudem nach dem Überschieben des Reifenwulstes auf die gegenüberliegende Felgenseite aufgrund mangelnder Zugänglichkeit nicht mehr genau positionierbar.

Für die Erfindung bestand also die Aufgabe, eine Einrichtung bereitzustellen, mit der bei der Reifenmontage bzw. bei einer Reifen-Montagemaschine die Montage eines Reifens auch bei innerhalb des Reifens und ggf. auf der Felge im Felgentiefbett angeordneten ringförmigen oder ringsegmentförmigen Zusatzelementen ohne weiteres und ohne zusätzliche manuelle Zwischenschritte möglich ist, die zudem einfach aufgebaut und in bestehende Reifen-Montagemaschinen integriert werden kann.

Gelöst wird diese Aufgabe durch eine Adaptereinrichtung gemäß den Merkmalen des Hauptanspruchs.

Weitere vorteilhafte Ausbildungen sind in den Unteransprüchen dargelegt.

Hierbei ist eine Adaptereinrichtung als dem Montagewerkzeug zugeordnetes zusätzliches Werkzeug ausgebildet, wobei an einer Halteeinrichtung einerseits eine erste Führungseinrichtung für den Reifenwulst der jeweils bereits im Bereich des Tiefbett befindlichen Reifenseite sowie andererseits eine zweite Führungs- und Andruckeinrichtung zur Positionierung des ggf. bereits auf der Felge aufgebrachten ringförmigen Zusatzelementes innerhalb des Reifens angeordnet ist.

Mit einer solchen Adaptereinrichtung kann im Rahmen der Reifenmontage auch das Überschieben des bereits im Felgenbett befindlichen Reifenwulstes zur anderen Felgenseite erfolgen, während das ringförmige Zusatzelement unterhalb des Wulstes in das Reifeninnere gedrückt wird, ohne daß die Position des Zusatzelementes sich nachteilig verändert oder Schädigungen auftreten.

Vorteilhafterweise weist die erste Führungseinrichtung der Adaptereinrichtung einen löffelartigen Fortsatz auf, ähnlich dem des Montagewerkzeuges, der eine Gleitfläche für den im Bereich des Tiefbetts befindlichen Reifenwulst bildet und diesen vom Tiefbett der Felge beabstandet führt. Ein solcher löffelartiger Fortsatz ist zum einen auf einfachste Weise herzustellen und hält zum anderen Teilbereiche des Wulstes in einem solchen Abstand von der Felge bzw. vom Felgentiefbett, daß bei der Drehung der Felge auf der Montagemaschine das ringförmige Zusatzelement ohne weiteres ins Reifeninnere gedrückt werden kann.

Je nach Ausbildung der Montagemaschine können natürlich die Adaptereinrichtung bzw. das zugehörige Werkzeug - ebenso wie das Montagewerkzeug - so ausgebildet sein, daß bei feststehender Felge letztere auf dem Umfang umfahren werden kann.

Eine weitere vorteilhafte Ausbildung besteht darin, daß die erste Führungseinrichtung eine konturierte Rolle aufweist, an der der im Bereich des Tiefbett befindliche Reifenwulst auf seiner Innenseite abrollt und vom Tiefbett der Felge beabstandet geführt wird. Durch eine solche Rolle wird die Reibung zwischen Reifenwulst und Führungseinrichtungen vermindert und die Gefahr von Beschädigungen oder übermäßiger Erwärmung beim Montagevorgang reduziert. Gegebenenfalls kann auch ein Schmiermittel zugesetzt werden.

In einer weiteren vorteilhaften Ausbildung ist die zweite Führungs- und Andruckeinrichtung der Adaptereinrichtung als Führungsschuh ausgebildet, der eine Gleitfläche für das Zusatzelement aufweist, mit der das Zusatzelement komprimiert und unter dem Im Bereich des Tiefbetts befindlichen Reifenwulst hindurch geführt wird. Im Zusammenwirken mit dem vom Tiefbett der Felge beabstandet geführten Reifenwulst erfolgt hierdurch eine sichere Positionierung des Zusatzelementes im Tiefbett und innerhalb des Reifens, wobei das Durchführen unter dem Reifenwulst mit Hilfe der Adaptereinrichtung sukzessive während der Drehung der Felge auf der Montageeinrichtung über den gesamten Rad- bzw. Reifenumfang durchgeführt und eine vergleichmäßigte und lediglich geringe Belastung aller Radbauteile gewährleistet wird.

Auch hier läßt sich in vorteilhafter Weise die Reibung und die Belastung der einzelnen Bauteile noch weiter dadurch reduzieren, daß die zweite Führungs- und Andruckeinrichtung der Adaptereinrichtung als konturierte Rolle ausgebildet ist, mit der das Zusatzelement komprimiert und unter dem im Bereich des Tiefbetts befindlichen Reifenwulst hindurch geführt wird.

Eine weitere vorteilhafte Ausbildung der Adaptereinrichtung besteht darin, daß das zusätzliche Werkzeug als dem Montagewerkzeug separat zustellbar ausgebildet ist. Durch eine solche Ausbildung kann die Adaptereinrichtung bzw. das zusätzliche Werkzeug je nach Bedarf zugestellt und relativ zum Montagewerkzeug positioniert werden, so daß vorlaufende oder nachfolgende Arbeitsgänge oder auch die Montage von Reifen ohne ringförmige Zusatzelemente nicht durch zusätzliche Einrichtung in der Handhabung erschwert oder behindert werden.

Gleichermaßen ist es natürlich möglich, insbesondere um eine problemlose Entnahme zu erreichen, die Adaptereinrichtung schwenkbar oder klappbar oder auch so auszubilden, daß die erste Führungseinrichtung und die zweite Führungs- und Andruckeinrichtung jeweils separat zustellbar sind.

Eine weitere vorteilhafte Ausbildung der Adaptereinrichtung besteht darin, daß die erste Führungseinrichtung für den bereits im Bereich des Tiefbetts befindlichen Reifenwulst beidseitig, d. h., an- und ablaufseitig der zweiten Führungs- und Andruckeinrichtung angeordnet ist. Durch eine solche Ausbildung vergrößert sich der vom Tiefbett der Felge beabstandet geführte Bereich des dort befindlichen Reifenwulstes, wodurch eine besonders schonende Behandlung des ringförmigen Zusatzelementes bei der Montage gewährleistet wird.

Selbstverständlich ist eine solche Adaptereinrichtung - wie im übrigen auch das Montagewerkzeug - nicht nur zum Aufziehen eines Reifens bei innerhalb des Reifens angeordneten Zusatzelementen geeignet, sondern auch zum Abziehen. Hierzu wird lediglich die Drehrichtung der Felge bzw. der Umfahrungssinn des / der Werkzeuge umgekehrt, wobei die Werkzeuge regelmäßig an- und ablaufseitig in geeigneter Weise ausgebildet sind.

Anhand eines Ausführungsbeispieles soll die Erfindung näher dargestellt werden. Es zeigen:
- Fig. 1: eine an einer Reifen-Montageeinrichtung gemäß Fig. 2 angeordnete Adaptereinrichtung, wobei lediglich die für die Erfindung wesentlichen Teile dargestellt sind
- Fig. 1a: eine Draufsicht auf die Führungseinrichtung für den Reifenwulst und die Führungs- und Andruckeinrichtung zur Positionierung des ringförmigen Zusatzelementes der Adaptereinrichtung
- Fig.2: die Ansicht einer herkömmlichen Reifen-Montagemaschine.

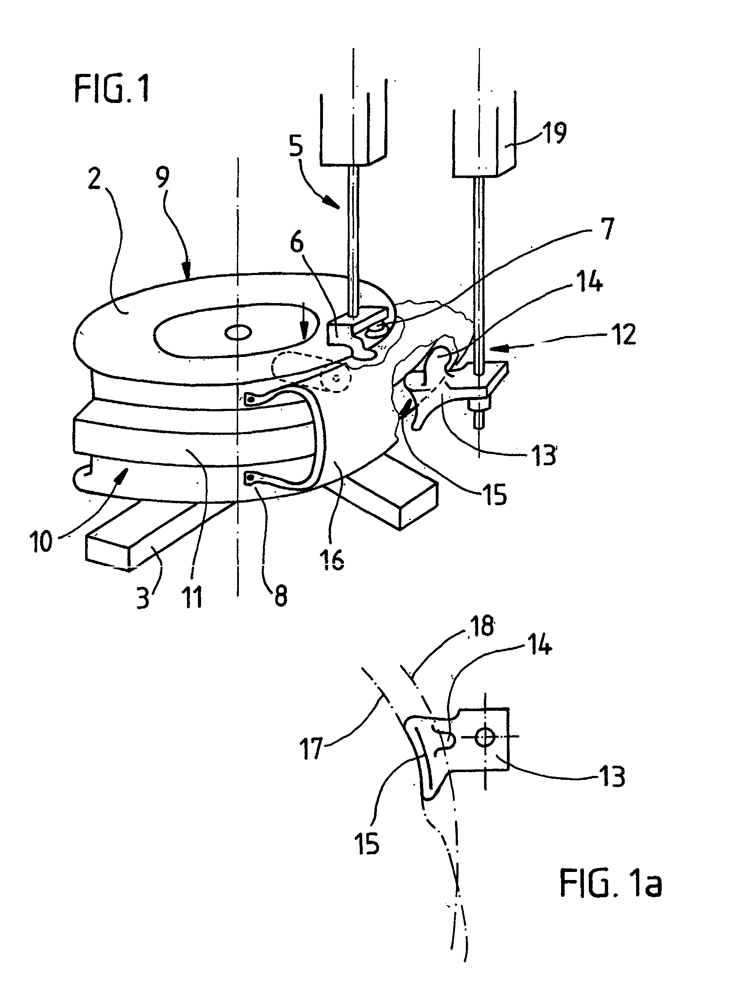

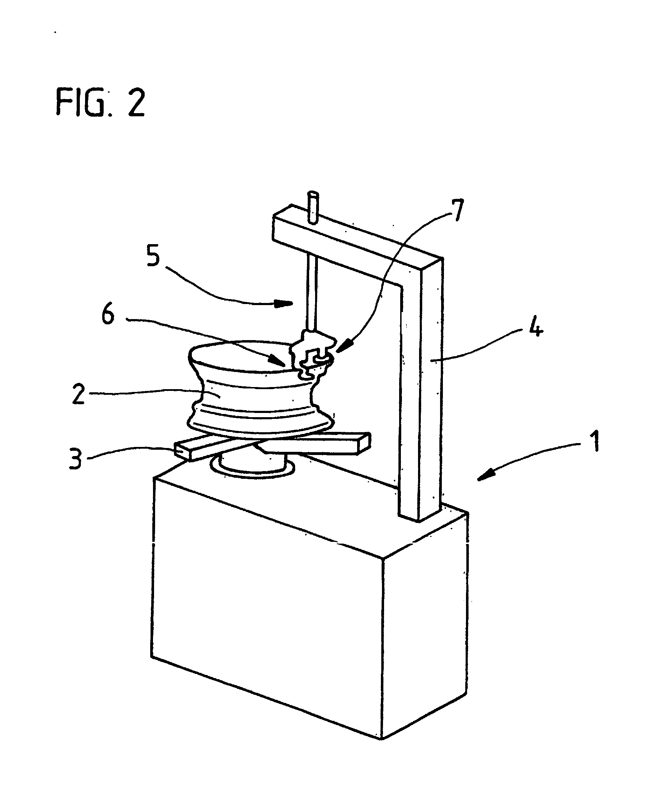

In der Zusammenschau der Figuren 1 und 2 erkennt man zunächst eine herkömmliche Reifen-Montagemaschine 1, bei der eine Felge 2 auf einer drehbaren Aufnahme 3 festgespannt ist, und die ein an einem Rahmen 4 befestigtes Montagewerkzeug 5 aufweist, welches einen löffelartigen Fortsatz 6 zum Überheben des Reifenwulstes einer Reifenseite über das Felgenhom 9 und eine im Bereich des Felgenhorns ablaufende Abstützrolle 7 zur Lagepositionierung des Werkzeugs aufweist.

Zunächst wird mit dem Montagewerkzeug der untere Reifenwulst 8 über das obere Felgenhorn 9 gehoben und rutscht danach ins Tiefbett 10, verbleibt jedoch zunächst noch auf der oberen Seite des ringförmigen Zusatzelementes 11, welches z.B. aus einem schallabsorbierendem Schaumstoffring besteht. Mit Hilfe der Adaptereinrichtung 12 wird dann der untere Reifenwulst 8 über das ringförmige Zusatzelement und in die in der Figur 1 dargestellte Position gehoben bzw. geschoben.

Die Adaptereinrichtung 12 weist ein dem Montagewerkzeug zugeordnetes zusätzliches Werkzeug 13 auf, welches eine erste Führungseinrichtung mit einem löffelartigen Fortsatz 14 beinhaltet, der eine Gleitfläche für den im zunächst oberen Bereich des Tiefbett befindlichen Reifenwulst bildet und diesen vom Tiefbett der Felge beabstandet führt.

Die Adaptereinrichtung bzw. das zugehörige Werkzeug 13 weist weiterhin eine zweite Führungs- und Andruckeinrichtung auf, die als Führungsschuh 15 ausgebildet ist, der eine Gleitfläche für das ringförmige Zusatzelement 11 aufweist, mit der das Zusatzelement komprimiert und unter dem im Bereich des Tiefbetts befindlichen Reifenwulst hindurch in den Innenraum des Reifens 16 geführt wird, ohne daß Schädigungen am Wulst oder am Zusatzelement entstehen können. Der Reifen 16 ist hier teilweise geschnitten dargestellt.

Die Figur 1a zeigt noch einmal das Werkzeug der Adaptereinrichtung in der Draufsicht, wobei hier deutlich der löffelartige Fortsatz 14 als erste Führungseinrichtung und die zweite Führungs- und Andruckeinrichtung in Form eines Führungsschuhes 15 erkennbar sind. Schematisch dargestellt sind hier als strichpunktierte Linien auch der Außendurchmesser /Außenumfang 17 des im Felgentiefbett befindlichen Zusatzelementes 11 sowie der Innendurchmesser Innenumfang 18 des Reifenwulstes 8 jeweils im Arbeitszustand während des Aufziehens des Reifens.

Die Adaptereinrichtung 12 ist hierbei über eine ebenfalls am Rahmen 4 der Reifen-Montagemaschine angeordnete Halterung 19 separat zustellbar ausgebildet und kann je nach Bedarf in Eingriff gebracht werden.

### Bezugszeichenliste

- 1: Reifen-Montagemaschine
- 2: Felge
- 3: drehbare Aufnahme
- 4: Rahmen
- 5: Montagewerkzeug
- 6: löffelartiger Fortsatz
- 7: Abstützrolle
- 8: Reifenwulst
- 9: Felgenhom
- 10: Tiefbett
- 11: ringförmiges Zusatzelement
- 12: Adaptereinrichtung
- 13: zusätzliches Werkzeug
- 14: löffelartiger Fortsatz
- 15: Führungsschuh
- 16: Reifen
- 17: Außendurchmesser / Außenumfang des Zusatzelementes
- 18: Innendurchmesser Innenumfang des Reifenwulstes
- 19: Halterung

## Patentansprüche

1. Adaptereinrichtung (12) für eine Reifen-Montagemaschine (1) zur Montage und Demontage von Reifen (16) auf Felgen (2) mit innerhalb des Reifens angeordneten ringförmigen oder ringsegmentförmigen Zusatzelementen (11), insbesondere mit Umhüllungen oder Verstärkungen versehenen Schaumstoffringen, wobei die Reifen-Montagemaschine eine Aufnahme (3) für die Felge und ein an einem Rahmen (4) (Galgen) angeordnetes und der Felge zustellbares Montagewerkzeug (5) mit einem löffelartigen Fortsatz (6) zum Überheben eines Reifenwulstes (8) einer Reifenseite über das Felgenhorn (9) und eine im Bereich des Felgenhorns ablaufende Abstützrolle (7) zur Lagepositionierung des Werkzeuges, sowie ggf. eine zustellbare Druckrolle zum nachlaufenden Drücken der Reifenseitenwand und des Reifenwulstes in das Felgentiefbett aufweist,
**dadurch gekennzeichnet, daß**
die Adaptereinrichtung (12) als dem Montagewerkzeug zugeordnetes zusätzliches Werkzeug (13) ausgebildet ist und an einer Halteeinrichtung (19) eine erste Führungseinrichtung (14) für den bereits im Bereich des Tiefbetts (10) befindlichen Reifenwulst sowie eine zweite Führungs - und Andruckeinrichtung (15) zur Positionierung des bereits auf der Felge aufgebrachten ringförmigen Zusatzelementes (11) innerhalb
des Reifens aufweist.

2. Adaptereinrichtung nach Anspruch 1, **dadurch gekennzeichnet, daß** die erste Führungseinrichtung einen löffelartigen Fortsatz (14) aufweist, der eine Gleitfläche für den im Bereich des Tiefbetts befindlichen Reifenwulst bildet und diesen vom Tiefbett der Felge beabstandet führt.

3. Adaptereinrichtung nach Anspruch 1, **dadurch gekennzeichnet, daß** die erste Führungseinrichtung eine konturierte Rolle aufweist, an der der im Bereich des Tiefbetts befindlichen Reifenwulst auf seiner Innenseite abrollt und vom Tiefbett der Felge beabstandet geführt wird.

4. Adaptereinrichtung nach Anspruch 1 bis 3, **dadurch gekennzeichnet, daß** die zweite Führungs - und Andruckeinrichtung als Führungsschuh (15) ausgebildet ist, der eine Gleitfläche für das Zusatzelement aufweist, mit der das Zusatzelement komprimiert und unter dem im Bereich des Tiefbetts befindlichen Reifenwulst hindurch geführt wird.

5. Adaptereinrichtung nach Anspruch 1 bis 3, **dadurch gekennzeichnet, daß** die zweite Führungs - und Andruckeinrichtung als konturierte Rolle ausgebildet ist, mit der das Zusatzelement komprimiert und unter dem im Bereich des Tiefbetts befindlichen Reifenwulst hindurch geführt wird.

6. Adaptereinrichtung nach Anspruch 1 bis 5, **dadurch gekennzeichnet, daß** das zusätzliche Werkzeug als dem Montagewerkzeug separat zustellbar ausgebildet ist.

7. Adaptereinrichtung nach Anspruch 1 bis 5, **dadurch gekennzeichnet, daß** die erste Führungseinrichtung für den bereits im Bereich des Tiefbetts befindlichen Reifenwulst beidseitig, d.h. an- und ablaufseitig der zweiten Führungs - und Andruckeinrichtung angeordnet ist.

## Claims

1. Adapter device (12) for a tyre fitting machine (1) for fitting tyres (16) on rims (2) and removing therefrom, said device having annular or ring-segment-shaped additional members (11) disposed within the tyre, more especially expanded plastic foam rings which are provided with coverings or reinforcements, the tyre fitting machine including a receiving means (3) for the rim and a fitting tool (5), which is disposed on a frame (4) (gallows-like bracket) and can be advanced to the rim, said tool having a spoon-like extension (6) for lifting a tyre bead (8) of one side of the tyre over the rim flange (9) and a support roller (7), which travels in the region of the rim flange, for positioning the tool, as well as possibly an advanceable pressure roller for urging the rear of the sidewall of the tyre and of the tyre bead into the drop base of the rim, **characterised in that** the adapter device (12) is in the form of an additional tool (13) associated with the fitting tool and includes, on a retaining device (19), a first guiding device (14) for the tyre bead already situated in the region of the drop base (10), as well as a second guiding and pressure-applying device (15) for positioning the annular additional member (11), already applied to the rim, internally of the tyre.

2. Adapter device according to claim 1, **characterised in that** the first guiding device includes a spoon-like extension (14), which forms a slide face for the tyre bead situated in the region of the drop base and guides said bead at a spacing from the drop base of the rim.

3. Adapter device according to claim 1, **characterised in that** the first guiding device includes a contoured roller, on which the tyre bead, situated in the region of the drop base, travels on its inside and is guided at a spacing from the drop base of the rim.

4. Adapter device according to claims 1 to 3, **characterised in that** the second guiding and pressure-applying device is in the form of a guide shoe (15), which includes a slide face for the additional member, with which slide face the additional member is compressed and guided under the tyre bead situated in the region of the drop base.

5. Adapter device according to claims 1 to 3, **characterised in that** the second guiding and pressure-applying device is in the form of a contoured roller, with which the additional member is compressed and guided under the tyre bead situated in the region of the drop base.

6. Adapter device according to claims 1 to 5, **characterised in that** the additional tool is adapted to be separately deliverable to the fitting tool.

7. Adapter device according to claims 1 to 5, **characterised in that** the first guiding device for the tyre bead, situated already in the region of the drop base, is disposed bilaterally, i.e. on the leading and trailing edges of the second guiding and pressure-applying device.

## Revendications

1. Dispositif adaptateur (12) pour une machine (1) de montage des pneumatiques servant au montage et au démontage de pneumatiques (16) sur des jantes (2), comprenant des éléments supplémentaires (11) de forme annulaire ou en forme de segment annulaire, disposés à l'intérieur du pneumatique, en particulier des anneaux en mousse dotés d'enrobages ou de renforts, où la machine de montage des pneumatiques comprend une monture (3) pour la jante et un outil de montage (5) disposé sur un cadre (4) (potence) et réglable par rapport à la jante, lequel outil de montage comprend un prolongement (6) en forme de cuiller pour soulever un talon de pneumatique (8) d'un flanc de pneumatique, par-dessus le rebord de jante (9), et comprend un rouleau d'appui (7) s'étendant dans la zone du rebord de jante et servant au positionnement de l'outil, ainsi que, le cas échéant, un rouleau de pression pour comprimer ensuite la paroi du flanc du pneumatique et le talon du pneumatique dans la base creuse de la jante,
**caractérisé en ce que** le dispositif adaptateur (12) est configuré comme un outil (13) supplémentaire associé à l'outil de montage, et comprend, sur un dispositif de fixation (19), un premier dispositif de guidage (14) pour le talon de pneumatique se trouvant déjà dans la zone de la base creuse (10) ainsi qu'un second dispositif de guidage et de compression (15) pour le positionnement de l'élément supplémentaire (11) de forme annulaire, déjà appliqué sur la jante, à l'intérieur du pneumatique.

2. Dispositif adaptateur selon la revendication 1, **caractérisé en ce que** le premier dispositif de guidage comprend un prolongement (14) en forme de cuiller qui forme une surface de glissement pour le talon de pneumatique se trouvant dans la zone de la base creuse et guide ce talon de pneumatique de façon espacée par rapport à la base creuse de la jante.

3. Dispositif adaptateur selon la revendication 1,
**caractérisé en ce que** le premier dispositif de guidage comprend un rouleau profilé sur lequel le talon du pneumatique, se trouvant dans la zone de la base creuse, est chassé en roulant sur son côté intérieur et est guidé de façon espacée par rapport à la base creuse de la jante.

4. Dispositif adaptateur selon la revendication 1 à 3,
**caractérisé en ce que** le second dispositif de guidage et de compression est conçu comme une griffe de guidage (15) qui comprend une surface de glissement pour l'élément supplémentaire, dispositif avec lequel l'élément supplémentaire est comprimé et guidé à travers et sous le talon du pneumatique se trouvant dans la zone de la base creuse.

5. Dispositif adaptateur selon la revendication 1 à 3,
**caractérisé en ce que** le second dispositif de guidage et de compression est conçu comme un rouleau profilé avec lequel l'élément supplémentaire est comprimé et guidé à travers et sous le talon du pneumatique se trouvant dans la zone de la base creuse.

6. Dispositif adaptateur selon la revendication 1 à 5,
**caractérisé en ce que** l'outil supplémentaire est conçu comme étant réglable séparément par rapport à l'outil de montage.

7. Dispositif adaptateur selon la revendication 1 à 5,
**caractérisé en ce que** le premier dispositif de guidage, pour le talon de pneumatique se trouvant déjà dans la zone de la base creuse, est disposé des deux côtés, c'est-à-dire sur le côté attaque et le côté fuite du second dispositif de guidage et de compression.
